(19) Europäisches Patentamt European Patent Office Office européen des brevets

(11) **EP 4 588 977 A1**

(12) **EUROPEAN PATENT APPLICATION**
published in accordance with Art. 153(4) EPC

(43) Date of publication:
**23.07.2025 Bulletin 2025/30**

(21) Application number: **23865595.5**

(22) Date of filing: **14.09.2023**

(51) International Patent Classification (IPC):
**C08L 97/02** (2006.01) **C08L 51/02** (2006.01)

(52) Cooperative Patent Classification (CPC):
**C08L 51/02; C08L 97/02**

(86) International application number:
**PCT/JP2023/033529**

(87) International publication number:
**WO 2024/058246 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022 JP 2022148023**

(71) Applicants:
• **Kyoto University**
  **Kyoto-shi, Kyoto 606-8501 (JP)**
• **Daicel Corporation**
  **Osaka-shi, Osaka 530-0011 (JP)**

(72) Inventors:
• **YOSHIOKA, Mariko**
  **Kyoto-shi, Kyoto 606-8501 (JP)**
• **RABEMANOLONTSOA, Harifara Fenohasina**
  **Kyoto-shi, Kyoto 606-8501 (JP)**
• **SHIRAISHI, Nobuo**
  **Kyoto-shi, Kyoto 606-8501 (JP)**
• **KITAYAMA, Kenji**
  **Tokyo 108-8230 (JP)**

(74) Representative: **Hoffmann Eitle**
**Patent- und Rechtsanwälte PartmbB**
**Arabellastraße 30**
**81925 München (DE)**

(54) **COMPOSITION**

(57) A composition contains an acetylated wood flour. This acetylated wood flour is substantially free of an inorganic acid ester bound to a cellulose main chain. A method of manufacturing the composition includes: treating a wood flour under reduced pressure; subjecting the wood flour treated under reduced pressure to pressurization treatment at an absolute pressure of 10 bar or more in an immersed state in a solvent containing an acetylating agent; and after the pressurization treatment, subjecting the wood flour to acetylation treatment by maintaining the solvent containing the wood flour and the acetylating agent at a temperature of 60 to 130°C in a pressurized state at an absolute pressure of 1.1 to 1.9 bar in an inert gas atmosphere.

FIG. 6

EP 4 588 977 A1

# EP 4 588 977 A1

**Description**

Technical Field

The present disclosure relates to a composition. Specifically, the present disclosure relates to a composition including woody biomass.

Background Art

As resin compositions with excellent thermoformability, synthetic polymers, such as polyethylene, polypropylene, polystyrene, poly(vinyl chloride), and poly(ethylene terephthalate), have been frequently used in the art. In recent years, the growing interest in the global environment leads to demand for environmentally friendly biodegradable materials in place of these synthetic polymers.

Cellulose acetate has biodegradability and is known to be degraded by activated sludge. On the other hand, cellulose acetate has poor thermal meltability due to hydrogen bonding resulting from hydroxy groups remaining in the molecular chain. Thus, techniques for imparting thermoformability to cellulose acetate have been studied. For example, JP 60-155710 A (Patent Document 1) discloses a thread forming method, in which modified cellulose acetate obtained by adding a cyclic ester to cellulose acetate having a free hydroxy group is melted and spun into the air. JP 06-207045 A (Patent Document 2) discloses a thermoplastic cellulose derivative obtained by reacting a polybasic acid or its anhydride with a monoepoxide compound or a polyhydric alcohol by kneading in the presence of a cellulose derivative having an unsubstituted hydroxy group (e.g., cellulose acetate).

Usually, pulp is used as a raw material for the production of cellulose acetate. Production of pulp requires a plurality of processes, for example, grinding wood, cooking, washing, bleaching, and drying, causing a high environmental load and cost increase. In addition, development of materials derived from biomass resources in place of materials derived from petroleum resources have been attracting attention toward realization of carbon neutrality and zero emission. For example, as biomass resources, particularly, there has been a demand for utilization of woody biomass, which does not compete with food and does not increase carbon dioxide in the atmosphere.

The main component of woody biomass is a natural polymer mixture called lignocellulose. Lignocellulose forms a strong higher-order structure in which cellulose, hemicellulose, and lignin are intricately intertwined. Furthermore, cellulose forms a strong cellulose type I crystal structure, which inhibits plasticity. This has been a big problem in utilizing woody biomass, such as wood, as it is as a forming material.

For example, as a technique for acetylating wood as it is, JP 2011-510842 T (Patent Document 3) discloses a method for acetylating wood of a commercial size by immersing the wood in an acetylation solution in a pressure reaction vessel and heating in two stages under controlled conditions. Rowell M. R. et al. (2014) Acetylation of Wood, in Deterioration and Protection of Sustainable Biomaterials, Chapter 18, pp 301-327 (Non-Patent Literature 1) describes a heterogeneous acetylation method for acetylating wood. Yabune H. (1997) Cellulose Commun. Vol. 4, No. 3, pp 114-122 (Non-Patent Literature 2) describes a method for preparing cellulose diacetate using low $\alpha$-cellulose as a raw material with the global environmental conservation in mind.

In addition, as a technique for modifying wood without pulping, JP 05-039412 A (Patent Document 4) discloses a degradable resin composition containing a mixture of an etherified or esterified modified lignocellulose (e.g., benzyl-etherified wood flour) and a fatty acid polyester (e.g., polycaprolactone). JP 07-304897 A (Patent Document 5) discloses a thermoplastic chemically modified lignocellulose composition obtained by reacting a polybasic acid or its anhydride with a monoepoxide compound or a polyhydric alcohol in the presence of chemically modified lignocellulose having an unsubstituted hydroxy group (e.g., acetylated lignocellulose).

Citation List

Patent Document

Patent Document 1: JP 60-155710 A

Patent Document 2: JP 06-207045 A

Patent Document 3: JP 2011-510842 T

Patent Document 4: JP 05-039412 A

Patent Document 5: JP 07-304897 A

Non-Patent Literature

Non-Patent Literature 1: Rowell M. R. et al. (2014) Acetylation of Wood, in Deterioration and Protection of Sustainable Biomaterials, Chapter 18, pp 301-327
Non-Patent Literature 2: Yabune H. (1997) Cellulose Commun. Vol. 4, No. 3, pp 114-122

Summary of Invention

Technical Problem

The techniques disclosed in Patent Document 3 and Non-Patent Literatures 1 and 2 are not intended for a thermoformable composition. The compositions disclosed in Patent Documents 4 and 5 do not have sufficient thermoplasticity to replace materials derived from petroleum resources that have been used in the art. In addition, according to findings of the inventors of the present disclosure, there is room for further improvement also in physical properties of molded products obtained by thermoforming the compositions disclosed in Patent Documents 4 and 5.

An object of the present disclosure is to provide a composition that has excellent thermoplasticity and can provide a molded product having excellent quality, such as mechanical and physical properties. From another viewpoint, an object of the present disclosure is to provide a method of manufacturing a composition with a low environmental load using woody biomass. In particular, an object of the present disclosure is to provide a composition suitable as a composition for thermoforming and a method of manufacturing the composition.

Solution to Problem

As a result of diligent studies, the inventors of the present disclosure have focused on the fact that catalyst residue in a thermoplastic composition is one of the causes of quality deterioration during thermoforming and have reached the constitution of the present disclosure.

That is, a composition according to an embodiment of the present disclosure contains an acetylated wood flour. This acetylated wood flour is substantially free of an inorganic acid ester bound to a cellulose main chain.

A method of manufacturing the composition according to an embodiment of the present disclosure includes:

(1) treating a wood flour under reduced pressure;
(2) subjecting the wood flour treated under reduced pressure to pressurization treatment at an absolute pressure of 10 bar or more in an immersed state in a solvent containing an acetylating agent; and
(3) after the pressurization treatment, subjecting the wood flour to acetylation treatment by maintaining the solvent containing the wood flour and the acetylating agent at a temperature of 60 to 130°C in a pressurized state at an absolute pressure of 1.1 to 1.9 bar in an inert gas atmosphere.

Advantageous Effects of Invention

The composition according to an embodiment of the present disclosure contains an acetylated wood flour produced without using an acetylation catalyst known in the art. This composition has thermoplasticity comparable to that of forming materials derived from petroleum resources known in the art and does not cause quality deterioration due to catalyst residue during thermoforming. A molded product obtained from this composition has excellent quality, such as mechanical properties. The composition according to an embodiment of the present disclosure is suitably used as a composition for thermoforming.

Brief Description of Drawings

FIG. 1 is an appearance photograph of a molded product (film) of Example 7.
FIG. 2 is an appearance photograph of a molded product (film) of Example 6.
FIG. 3 is an appearance photograph of a molded product (film) of Example 5.
FIG. 4 is an appearance photograph of a molded product (film) of Example 4.

FIG. 5 is an appearance photograph of a molded product (film) of Example 3.

FIG. 6 is another appearance photograph of the molded product (film) of Example 3.

FIG. 7 is a scanning electron microscope (SEM) image (magnification 5000x) of a fracture surface of Example 3 after a tensile test.

FIG. 8 is an appearance photograph of a molded product (film) of Comparative Example 2.

FIG. 9 is an SEM image (magnification 5000x) of a fracture surface of Comparative Example 2 after a tensile test.

FIG. 10 includes another appearance photograph (upper figure) of the molded product (film) of Example 3 and an appearance photograph (lower figure) when the molded product (film) of Example 3 was placed on a sheet of paper with letters.

FIG. 11 includes an appearance photograph (upper figure) of the molded product (film) of Example 4 and an appearance photograph (lower figure) when the molded product (film) of Example 4 was placed on a sheet of paper with letters.

FIG. 12 includes an appearance photograph (upper figure) of the molded product (film) of Example 5 and an appearance photograph (lower figure) when the molded product (film) of Example 5 was placed on a sheet of paper with letters.

FIG. 13 includes an appearance photograph (upper figure) of the molded product (film) of Example 6 and an appearance photograph (lower figure) when the molded product (film) of Example 6 was placed on a sheet of paper with letters.

FIG. 14 includes an appearance photograph (upper figure) of the molded product (film) of Example 7 and an appearance photograph (lower figure) when the molded product (film) of Example 7 was placed on a sheet of paper with letters.

Description of Embodiments

Hereinafter, an example of a preferred embodiment will be specifically described. Each configuration, a combination of them, and the like in each embodiment are an example, and an addition, an omission, a substitution, and another change of the configuration can be appropriately made without departing from the spirit of the present disclosure. The present disclosure is not limited by the embodiments and is limited only by the claims. In addition, each embodiment disclosed in the present specification can be combined with any other feature disclosed in the present specification.

In the present specification, "from X to Y" and "of X to Y" indicating a range mean "X or more and Y or less" or "X or higher and Y or lower", and "ppm" means "mass ppm". In addition, "mass%" and "wt.%" are treated as synonyms. Unless otherwise noted, all test temperatures are room temperature (20°C $\pm$ 5°C).

Composition

A composition according to an embodiment of the present disclosure contains an acetylated wood flour. As described later, the production of this composition does not require the addition of an acetylation catalyst. That is, in this composition, the acetylated wood flour is substantially free of catalyst residue. This composition is preferably essentially composed only of the acetylated wood flour. This composition has thermoplasticity comparable to that of forming materials derived from petroleum resources known in the art. In addition, quality deterioration due to catalyst residue is avoided during thermoforming of this composition. According to the composition according to an embodiment of the present disclosure, a molded product with excellent quality can be provided by a thermoforming technique known in the art. The composition according to an embodiment of the present disclosure has physical properties particularly suitable for thermoforming.

Hereinafter, in the present specification, this composition and a method of manufacturing the composition will be described. In particular, a composition for thermoforming will be described as a representative and suitable embodiment of this composition. In addition, a method of manufacturing a composition for thermoforming, which is a representative and suitable embodiment of this composition, will be described. In the present specification, the composition is not limited only to the composition for thermoforming, and the method of manufacturing the composition is not limited only to the method of manufacturing a composition for thermoforming.

Composition for Thermoforming

The composition for thermoforming, which is a suitable example according to an embodiment of the present disclosure, contains an acetylated wood flour. As described later, the production of this composition for thermoforming does not require the addition of an acetylation catalyst. That is, in this composition for thermoforming, the acetylated wood flour is substantially free of catalyst residue. This composition for thermoforming is preferably essentially composed only of the acetylated wood flour. This composition for thermoforming has thermoplasticity comparable to that of forming materials derived from petroleum resources known in the art. In addition, quality deterioration due to catalyst residue is avoided during thermoforming of this composition for thermoforming. According to this composition for thermoforming, a molded product with excellent quality can be provided by a thermoforming technique known in the art.

Here, "thermoforming" means forming a composition having thermoplasticity into any shape by heating and softening the composition, deforming the composition in the softened state by applying an external force with compressed air, vacuum, a mold, a hot plate, a plug, or the like, and then cooling. In addition, the "acetylated wood flour" means a wood flour that has been subjected to acetylation treatment. The "acetylation treatment" means a treatment for introducing an acetyl group into the wood flour and is specifically defined as a chemical treatment for replacing the hydrogen atom(s) of one or some hydroxy groups (-OH) in the wood flour by an acetyl group(s) ($-CO-CH_3$). Here, the "wood flour" means a whole chipped wood flour obtained by shredding and/or grinding woody biomass used as a raw material. The "whole wood flour" means that the chipped wood flour has not been separated or fractionated into components, such as lignin, hemicellulose, and cellulose.

In addition, in an embodiment of the present disclosure, "catalyst residue" is usually a component derived from a catalyst used in acetylation treatment (which may hereinafter be referred to as an acetylation catalyst) and is a concept including not only the catalyst itself but also a component that is ester-bound to a cellulose main chain in association with an acetylation reaction. For example, in the case of acetylation of a wood flour using an inorganic acid as an acetylation catalyst, this inorganic acid reacts with a hydroxy group of a cellulose main chain. As described later, the acetylated wood flour according to an embodiment of the present disclosure is produced without using an acetylation catalyst, and thus this acetylated wood flour is substantially free of an inorganic acid ester bound to a cellulose main chain. "Substantially free of" means that an inorganic acid ester formed by a reaction of a catalyst intentionally added in the acetylation treatment of the wood flour is not contained, but a similar component contained in the wood flour itself may be detected as an inorganic acid ester. Thus, the composition with a detection amount of an inorganic acid ester detected from the composition of 0.5 wt.% or less, preferably 0.3 wt.% or less, and more preferably 0.2 wt.% or less relative to the entire amount of the composition is included in the technical scope of the present disclosure. The detection amount of the inorganic acid ester is preferably 0 wt.% relative to the entire amount of the composition. The detection amount of the inorganic acid ester may be 0 wt.% or more and 0.5 wt.% or less, 0 wt.% or more and 0.3 wt.% or less, or 0 wt.% or more and 0.2 wt.% or less relative to the entire amount of the composition. For the quantification of the inorganic acid ester in the composition, a known detection method (e.g., a method of performing elemental analysis of a gas generated by a combustion method) can be used. In addition, in the case where the composition is essentially composed only of an acetylated wood flour, the amount of the inorganic acid ester detected from the acetylated wood flour preferably satisfies the range described above relative to the whole acetylated wood flour.

For example, to explain this by a sulfuric acid catalyst, which is an acetylation catalyst, as an example, the inorganic acid ester means a bound sulfuric acid component. More specific examples of this bound sulfuric acid component include a sulfate ester in which sulfuric acid is bound to lignocellulose constituting the wood flour as a sulfate group or a sulfonate group. That is, the acetylated wood flour according to an embodiment of the present disclosure is substantially free of a sulfate ester (bound sulfuric acid) derived from a catalyst. In this case, the inorganic acid ester amount (sulfate ester amount) in the acetylated wood flour can be evaluated by measuring the sulfur content (including the bound sulfuric acid).

Specifically, a dry sample is baked in an electric furnace at 1300°C, sublimated sulfur dioxide gas is trapped in a 10% hydrogen peroxide aqueous solution and titrated using a normal sodium hydroxide aqueous solution, and the amount in terms of $SO_4^{2-}$ is determined from this titration value as the sulfur content in the acetylated wood flour, and the sulfur content is expressed in ppm unit as the amount of $SO_4^{2-}$ in 1 g of the sample in absolute dry state. The sulfur content in the acetylated wood flour according to an embodiment of the present disclosure measured by this method may be 100 ppm or less, 80 ppm or less, or 50 ppm or less. Most of the sulfur contained in the wood flour itself is a sulfur-containing protein. A sulfur-containing protein is almost completely degraded at temperatures up to 600°C. Thus, the amount of sulfur derived from wood may be estimated by performing the same test by setting the temperature of the electric furnace described above at 600°C. The sulfur content in the acetylated wood flour is preferably 0 ppm. The sulfur content in the acetylated wood flour may be 0 ppm or more and 100 ppm or less, 0 ppm or more and 80 ppm or less, or 0 ppm or more and 50 ppm or less.

In the composition for thermoforming according to an embodiment of the present disclosure, the amount of acetyl groups introduced in the acetylated wood flour affects the thermoplasticity. The amount of acetyl groups introduced can be evaluated using a degree of acetylation R represented as a ratio $S_1/S_2$ of a peak intensity $S_1$ of stretching vibration derived from acetyl carbonyl at 1730 to 1745 $cm^{-1}$ to a peak intensity $S_2$ of stretching vibration derived from C-O in the cellulose main chain at 1020 to 1040 $cm^{-1}$ in an infrared absorption spectrum of the acetylated wood flour. From the viewpoint of improving the thermoplasticity, this degree of acetylation R may be 0.50 or more, 0.55 or more, or 0.60 or more. As described later, from the viewpoint that a ring-opening polymerization product of a lactone compound can be introduced into the acetylated wood flour, the degree of acetylation R is preferably 0.90 or less.

From the viewpoint of improving the thermoplasticity, the degree of acetyl substitution calculated on the assumption that the total amount of the acetylated wood flour is cellulose acetate may be 0.9 or more, 1.0 or more, or 1.1 or more. In addition, from the viewpoint that a ring-opening polymerization product of a lactone compound described later can be introduced, the degree of acetyl substitution may be 2.9 or less or 2.8 or less.

In an embodiment of the present disclosure, the form of the acetylated wood flour is not particularly limited. From the viewpoint of ease of handling, the acetylated wood flour may be powdery or particulate. The size of the powdery or particulate acetylated wood flour may be from 0.10 mm to 3.0 mm, from 0.15 mm to 2.0 mm, from 0.20 mm to 1.0 mm, from 0.25 mm to 0.75 mm, or from 0.30 mm to 0.50 mm. The size of the acetylated wood flour is measured by a sieve classification method using JIS standard sieves.

The amount of the acetylated wood flour contained in the composition for thermoforming is not particularly limited and can be appropriately selected as long as the effects of the present disclosure are obtained and according to the application. For example, from the viewpoints of ease of thermoforming and improving the biodegradability, the amount of the acetylated wood flour in the composition for thermoforming may be 60 wt.% or more, 70 wt.% or more, 80 wt.% or more, or 90 wt.% or more, and its upper limit is 100 wt.%.

In an embodiment, the acetylated wood flour contained in the composition for thermoforming may be grafted with a ring-opening polymerization product of a lactone compound (which may hereinafter be referred to as "polylactone"). Here, the "lactone compound" means a cyclic compound having an ester group (-COO-) in the molecule, the compound having an intramolecular ester bond obtained by eliminating water from a carboxy group (-COOH) and a hydroxy group (-OH) in the same molecule. In the present specification, a lactone compound to be subjected to ring-opening polymerization may be referred to as a "lactone monomer".

The composition for thermoforming containing the acetylated wood flour grafted with polylactone (which may hereinafter be referred to as a polylactone-modified acetylated wood flour) has better thermoplasticity. A molded product with excellent transparency and tensile properties can be obtained by thermoforming this composition. From the viewpoints of biodegradability and a low environmental load, an acetylated wood flour grafted with aliphatic polylactone is preferred.

The amount of the polylactone-modified acetylated wood flour contained in the composition for thermoforming is also not particularly limited. From the viewpoints of ease of thermoforming and improving the transparency of the resulting molded product, the amount of the polylactone-modified acetylated wood flour in the composition for thermoforming may be 60 wt.% or more, 70 wt.% or more, 80 wt.% or more, or 90 wt.% or more, and its upper limit is 100 wt.%.

The acetylated wood flour grafted with polylactone may be obtained by ring-opening graft polymerization of a lactone compound with an unsubstituted hydroxy group in the acetylated wood flour or may be obtained by chemically bonding a ring-opening polymerization product of a lactone compound to an unsubstituted hydroxy group in the acetylated wood flour. The composition for thermoforming may contain an acetylated wood flour not grafted with polylactone as long as the effects of the present disclosure are obtained.

The type of lactone compound is not particularly limited as long as the effects of the present disclosure are obtained. Examples of the lactone compound that can be graft-polymerized with a hydroxy group in the acetylated wood flour include lactone compounds with from 3 to 10 carbon atoms constituting the ring. Specific examples include ε-caprolactone compounds, β-propiolactone compounds, γ-butyrolactone compounds, and δ-valerolactone compounds. One or more lactone compounds may be used in combination.

From the viewpoint of high polymerization reactivity, an ε-caprolactone compound is preferred. Examples of ε-caprolactone compounds include ε-caprolactone, monomethyl-ε-caprolactone, monoethyl-ε-caprolactone, monodecyl-ε-caprolactone, monopropyl-ε-caprolactone, dimethyl-ε-caprolactone, trimethyl-ε-caprolactone, ethoxy-ε-caprolactone, and cyclohexyl-ε-caprolactone.

The preferred lactone compound is ε-caprolactone from the viewpoint that it is inexpensive and readily available. The composition containing the acetylated wood flour grafted with the ring-opening polymerization product of ε-caprolactone is easily thermoformed. The resulting molded product has improved transparency and tensile properties and further exhibits good biodegradability.

In the acetylated wood flour grafted with polylactone, the content of the polylactone is not particularly limited. From the viewpoint of improving thermoplasticity, the content of the polylactone is preferably 3 wt.% or more, more preferably 5 wt.% or more, and even more preferably 7 wt.% or more relative to the whole polylactone-modified acetylated wood flour. Thus, from the viewpoint of ease of production, the content of the polylactone is preferably 30 wt.% or less, more preferably 25 wt.% or less, and even more preferably 20 wt.% or less. The content of the polylactone grafted onto the acetylated wood flour can be determined, for example, based on the weight change before and after grafting. The content of the polylactone can also be determined based on the weight change before and after hydrolysis treatment of the polylactone-modified acetylated wood flour.

In the acetylated wood flour grafted with polylactone, the average degree of polymerization of the ring-opening polymerization product of a lactone compound is not particularly limited, but from the viewpoint of improving the transparency and tensile properties of the resulting molded product, the average degree of polymerization may be 2.0 or more, 5.0 or more, 10.0 or more, 15.0 or more, or 20.0 or more. From the viewpoint of exhibiting the physical properties of the acetylated wood flour, the average degree of polymerization may be 100 or less. The average degree of polymerization of the polylactone in the polylactone-modified acetylated wood flour is calculated from the degree of acetyl substitution and the polylactone content described above.

In an embodiment of the present disclosure, the form of the polylactone-modified acetylated wood flour is not particularly limited. For example, the polylactone-modified acetylated wood flour may be powdery or particulate. From the viewpoint of ease of thermoforming, the size of the powdery or particulate polylactone-modified acetylated wood flour may be from 0.10 mm to 3.0 mm, from 0.15 mm to 2.0 mm, from 0.20 mm to 1.0 mm, from 0.25 mm to 0.75 mm, or from 0.30 mm to 0.50 mm. The size of the polylactone-modified acetylated wood flour is measured by a sieve classification method using JIS standard sieves.

Method of Manufacturing Composition for Thermoforming

A method of manufacturing the composition for thermoforming described above includes:

(1) treating a wood flour under reduced pressure;
(2) subjecting the wood flour treated under reduced pressure to pressurization treatment at an absolute pressure of 10 bar or more in an immersed state in a solvent containing an acetylating agent; and
(3) after the pressurization treatment, subjecting the wood flour to acetylation treatment by maintaining the solvent containing the wood flour and the acetylating agent at a temperature of 60 to 130°C in a pressurized state at an absolute pressure of 1.1 to 1.9 bar in an inert gas atmosphere. According to the production method according to an embodiment of the present disclosure, an acetyl group can be introduced into the wood flour without using an acetylation catalyst by appropriately performing the decompression treatment and the pressurization treatment. This provides an acetylated wood flour substantially free of catalyst residue. This acetylated wood flour may be used as it is as the composition for thermoforming according to an embodiment of the present disclosure. As long as the effects of the present disclosure are obtained, the composition for thermoforming may contain a wood flour that does not undergo acetylation treatment.

This production method may further include (4-1) performing graft polymerization by adding a lactone compound to the wood flour subjected to the acetylation treatment or (4-2) performing graft reaction by adding a ring-opening polymerization product of a lactone compound to the wood flour subjected to the acetylation treatment. This provides a polylactone-modified acetylated wood flour. This polylactone-modified acetylated wood flour may be used as it is as the composition for thermoforming according to an embodiment of the present disclosure. As long as the effects of the present disclosure are obtained, the composition for thermoforming may contain an acetylated wood flour that does not undergo polylactone modification, or may contain wood flour that does not undergo acetylation treatment. The production method including (4-1) performing graft polymerization by adding a lactone compound to the wood flour subjected to the acetylation treatment has high reaction efficiency and is suitably used.

The wood flour as a raw material may be obtained, for example, by shredding or grinding woody biomass. The woody biomass is not particularly limited, and hardwood, softwood, or the like may be used. Timber from forest thinning, waste lumber, residual timber in forest land that are generated in the forestry sector, or the like can be utilized. Herbaceous biomass, such as rice straw, bamboo, or wheat bran, may be used in combination as necessary.

The form and size of the wood flour are not particularly limited. For example, in the case of grinding the wood flour into powdery or particulate form, from the viewpoint of improving the reaction efficiency, the size may be from 0.10 mm to 3.0 mm, from 0.15 mm to 2.0 mm, from 0.20 mm to 1.0 mm, from 0.25 mm to 0.75 mm, or from 0.30 mm to 0.50 mm. The size of the wood flour is measured by a sieve classification method using JIS standard sieves.

In the production method according to an embodiment of the present disclosure, the means for the decompression treatment and the pressurization treatment are not particularly limited. For example, the pressure can be adjusted to the preferred range described later by a known means, such as an aspirator, an ejector, a compressor, or a mechanical pump. In the present specification, when a pressure is indicated, an "absolute pressure" based on an absolute vacuum standard (0 bar) is used unless otherwise specifically stated.

The decompression treatment of the wood flour before the acetylation treatment is performed in a reduced pressure state at an absolute pressure preferably of 0.2 bar or less and more preferably of 0.1 to 0.2 bar. This decompression treatment reduces moisture in the wood flour, which is an inhibitory factor for the acetylation reaction described later. From the viewpoint of promoting the acetylation treatment, the water content ratio of the wood flour treated under reduced pressure is preferably 10 wt.% or less, more preferably 8 wt.% or less, and even more preferably 5 wt.% or less. The decompression treatment temperature is usually room temperature and may be from 20 to 30°C. The decompression treatment time is not particularly limited and is appropriately selected in a range in which a desired water content ratio is obtained.

In this production method, the wood flour treated under reduced pressure is subjected to the pressurization treatment in a state of being immersed in a solvent containing an acetylating agent. An acetylating agent and a solvent known in the art can be appropriately selected and used. Examples of the acetylating agent include acetic anhydride and an acetyl halide. In addition, examples of the solvent include acetic acid and methylene chloride. Two or more solvents may be mixed and used. A combination of acetic anhydride as the acetylating agent and acetic acid as the solvent is suitably used.

The mixing ratio of the acetylating agent to the solvent is not particularly limited and is appropriately selected according to the types of acetylating agent and solvent. For example, the weight ratio of the acetylating agent to the solvent (acetylating agent/solvent) may be 50/50 or more, 60/40 or more, or 70/30 or more, and 95/5 or less or 90/10 or less.

The amount of the acetylating agent to be used is appropriately selected according to the amount of acetyl groups introduced in the acetylated wood flour. For example, the amount of the acetylating agent to be used may be 200 parts by weight or more or 210 parts by weight or more and 400 parts by weight or less or 350 parts by weight or less per 100 parts by weight of the wood flour as a raw material. The amount of the solvent to be used may be, for example, 10 parts by weight or more or 20 parts by weight or more and 400 parts by weight or less or 350 parts by weight or less per 100 parts by weight of the wood flour as a raw material.

In the case of subjecting the wood flour to the pressurization treatment in an immersed state in a solvent containing an acetylating agent, an inert gas is introduced into the reaction system, and the pressurization treatment is performed in a pressurized state at a pressure gauge preferably of 10 bar or more and more preferably of 10 to 20 bar. For the inert gas, nitrogen gas is suitably used. This pressurization treatment efficiently introduces the acetylating agent into the structure of the wood flour, enabling uniform acetylation treatment. The pressurization treatment temperature is usually room temperature and may be from 20 to 30°C. The pressurization treatment time is not particularly limited and may be appropriately selected according to the treatment amount of the wood flour and the treatment temperature.

In this production method, a solvent containing the wood flour and an acetylating agent is subjected to pressurization treatment at 10 bar or more, then the pressure is reduced to an absolute pressure of 1.1 to 1.9 bar, and the solvent is heated to a temperature of 60 to 130°C in a pressurized state at 1.1 to 1.9 bar in an inert gas atmosphere. This heating allows the acetylation reaction to proceed. Specifically, acetyl groups are introduced to hydroxy groups in lignocellulose constituting the wood flour, and the acetylated wood flour is obtained. The heating time is appropriately selected according to the amount of acetyl groups introduced. For the inert gas, nitrogen gas described above is suitably used.

As long as the effects of the present disclosure are obtained, the acetylation treatment may be performed in one stage or in two stages. In the case of one-stage treatment, the acetylation treatment may be performed, for example, at 130°C for 90 minutes or more. In the case of two-stage treatment, the acetylation treatment may be performed, for example, by heating at 60°C for 45 minutes (first acetylation), then increasing the temperature to 130°C over 10 minutes, and heating at 130°C for 35 minutes (second acetylation).

In this production method, the wood flour subjected to the acetylation treatment may be washed to remove excess acetylating agent and solvent, or the wood flour subjected to the acetylation treatment may be subjected to graft polymerization with a lactone compound described later without washing. During the acetylation treatment described above, an acetylating agent (e.g., acetic anhydride) reacts with water in the reaction system. Water is removed from the reaction system by this reaction. **In** this reaction system, performing graft polymerization with a lactone compound using residual hydroxy groups contained in the acetylated wood flour as an initiator prevents a side reaction due to water as an initiator. This can provide a graft polymer with little contamination (or no contamination) with a by-product homopolymer of a lactone compound. **In** the case of washing the wood flour subjected to the acetylation treatment, the type of washing solvent is not particularly limited, and a solvent that can dissolve the acetylating agent and the solvent is appropriately selected. **In** the case of using acetic anhydride and acetic acid as the acetylating agent and the solvent, the suitable washing solvent is water.

In this production method, the acetylated wood flour after washing may be dried. The weight increase rate (%) calculated from the weight of the acetylated wood flour after drying and the weight of the wood flour before the decompression treatment is an index of the amount of acetyl groups introduced into the wood flour. From the viewpoint of ease of thermoforming, the required weight increase rate of the acetylated wood flour after drying at 105°C for 12 hours is preferably 20.0 wt.% or more, more preferably 22.0 wt.% or more, and even more preferably 24.0 wt.% or more. The upper limit is not particularly limited, but the weight increase rate is preferably 90.0 wt.% or less from the viewpoint of introducing polylactone by graft polymerization.

In the case of graft polymerization by adding a lactone compound to the acetylated wood flour, the lactone compound described above can be used. An ε-caprolactone compound is preferred, and ε-caprolactone is more preferred.

The average degree of polymerization of the polycaprolactone to be grafted onto the acetylated wood flour can be controlled by the ratio of the acetylated wood flour to the lactone compound. In the polycaprolactone-modified acetylated wood flour, from the viewpoint of exhibiting the physical properties of polycaprolactone, the ratio of the acetylated wood flour to the lactone compound may be 1:2 or more, 1:5 or more, 1: 10 or more, 1: 15 or more, 1:20 or more, or 1:40 or more in terms of acetylated wood flour:lactone compound (weight ratio). That is, in the polycaprolactone-modified acetylated wood flour, the amount of the lactone compound may be 200 parts by weight or more, 500 parts by weight or more, 1000 parts by weight or more, 1500 parts by weight or more, 2000 parts by weight or more, or 4000 parts by weight or more per 100 parts by weight of the acetylated wood flour. In addition, in the polycaprolactone-modified acetylated wood flour, from the viewpoint of exhibiting the physical properties of the acetylated wood flour, the ratio of the acetylated wood flour to the lactone compound may be 1:200 or less in terms of acetylated wood flour:lactone compound (weight ratio). That is, the amount of the lactone compound in the polycaprolactone-modified acetylated wood flour may be 20000 parts by weight or less per 100 parts by weight of the acetylated wood flour.

In the case of graft polymerization by adding a lactone compound to the acetylated wood flour, a polymerization catalyst is preferably used from the viewpoint of improving reaction efficiency. Examples of the polymerization catalyst include diphenyl phosphate, tin (II) 2-ethylhexanoate, and methanesulfonic acid. The amount of the polymerization catalyst to be added is not particularly limited but may be, for example, 0.1 wt.% or more or 0.2 wt.% or more, and 5.0 wt.% or less or 4.0 wt.% or less relative to the total amount of the acetylated wood flour and the lactone compound.

In the case of graft polymerization by adding a lactone compound to the acetylated wood flour, the polymerization temperature may be 20°C or higher, 50°C or higher, 70°C or higher, or 90°C or higher, and 140°C or lower. The polymerization time may be selected to obtain a desired yield according to the polymerization temperature.

After completion of the polymerization reaction, the reaction product can be washed and/or purified to remove an unreacted monomer and an ungrafted homopolymer. The washing method and the purification method are not particularly limited, and known washing means and purification means are appropriately selected and used. For example, the polylactone-modified acetylated wood flour may be obtained by washing the reaction product with a good solvent for a lactone compound and polylactone and separating the solid. The resulting polylactone-modified acetylated wood flour may be dried using a known means.

The composition for thermoforming may contain a known additive, such as a plasticizer, a colorant, an ultraviolet absorber, a light stabilizer, an antioxidant, a heat stabilizer, an optical property adjusting agent, a fluorescent brightener, a flame retardant, a lubricant, a hydrolysis inhibitor, or a water repellent, as long as the effects of the present invention are not inhibited.

Molded product

The molded product according to an embodiment of the present disclosure is produced by thermoforming the composition for thermoforming described above. The method for thermoforming the composition according to an embodiment of the present disclosure is not particularly limited. A known method, such as melt molding, injection molding, or melt film forming, can be used. In addition, the shape and physical properties of the molded product obtained using the composition according to an embodiment of the present disclosure as a forming material are not particularly limited, and the molded product can be formed into a desired shape with the transparency, strength, elastic modulus, and the like controlled as necessary according to the degree of acetylation of the wood flour and the graft amount of the lactone compound.

Applications

The composition for thermoforming according to an embodiment of the present disclosure can be suitably used as a material, for example, for tableware, packaging containers, trays, agricultural materials, fishery materials, OA parts, building materials, medical parts, home electric appliance parts, automobile members, daily goods, stationery, and eyeglass frames. The composition for thermoforming according to an embodiment of the present disclosure can also be applied to biodegradable mulch films and the like in the agricultural sector.

Examples

Hereinafter, the effects of the present disclosure will be clarified by examples, but the present disclosure should not be construed as limited based on the description of the examples. In addition, pressures are all absolute pressures.

Test 1: Preparation and Physical Properties of Acetylated Wood flour (AW)

Example 1

In a reaction vessel, 1.5 g of air-dried Japanese cedar wood flour (150 μm pass) was placed, and the pressure was reduced to 0.1 to 0.2 bar at room temperature. After 30 minutes, 10 g of an acetylating agent composed of 90 mass% of acetic anhydride (available from FUJIFIILM Wako Pure Chemical Corporation) and 10 mass% of acetic acid (available from FUJIFILM Wako Pure Chemical Corporation) was added to the reaction vessel, the pressure in the reaction vessel was adjusted to 10 bar, and the reaction vessel was allowed to stand for 90 minutes. Subsequently, the pressure in the reaction vessel was reduced to 1.1 to 1.9 bar, and then acetylation reaction was performed in two steps in a nitrogen atmosphere. Specifically, the acetylation reaction was performed by heating at a temperature of 60°C for 45 minutes in a pressurized state at 1.1 to 1.9 bar (first acetylation reaction), then increasing the temperature to 130°C over 10 minutes, and heating at a temperature of 130°C for 35 minutes (second acetylation reaction). The total of the heating time was 90 minutes. The resulting product was collected, washed with water, then blow-dried at 105°C for 12 hours, then vacuum-dried at 105°C for 24 hours, and an acetylated wood flour of Example 1 was obtained.

Example 2

An acetylated wood flour of Example 2 was obtained in the same manner as in Example 1 except for performing the acetylation reaction in one step (130°C/90 minutes).

Comparative Example 1

The air-dried Japanese cedar wood flour (150 $\mu$m pass) used in Examples 1 and 2 was used as Comparative Example 1.

Degree of Crystallinity CI

The degrees of crystallinity CI (%) of Examples 1 and 2 and Comparative Example 1 were determined by wide-angle X-ray diffraction measurement. The obtained results are shown in Table 1 below. For the measurement, a horizontal sample multi-purpose X-ray diffractometer (trade name "Ultima-IV") available from Rigaku Corporation was used. The measurement was performed at room temperature (about 25°C). Other measurement conditions are as follows.

Radiation source: CuK$\alpha$ ($\lambda$ = 1.542 Å)
Sampling rate: 1°/min
Sampling width: 0.02°
Tube current: 40 mA
Measurement range: $2\theta$ = 2 to 40°
Number of repetition: once
Tube voltage: 40 kV
Optical system: parallel beam method

Degree of acetylation R

Infrared absorption spectra of the acetylated wood flours of Examples 1 and 2 and Comparative Example 1 were obtained using a Shimadzu Fourier Transform Infrared Spectrophotometer (trade name "IR Prestage-21") available from Shimadzu Corporation. The measurement conditions are as follows.

Measurement method: ATR method
Cumulative number of scans: 64
Measurement wavelength: from 400 to 4000 cm$^{-1}$
Resolution: 4 cm$^{-1}$

From the resulting infrared absorption spectrum, the ratio $S_1/S_2$ of the peak intensity $S_1$ of the stretching vibration derived from acetyl carbonyl at 1730 to 1745 cm$^{-1}$ to the peak intensity $S_2$ of the stretching vibration derived from C-O in the cellulose main chain at 1020 to 1040 cm$^{-1}$ was determined as the degree of acetylation R. The obtained results are shown in Table 1 below. From Table 1, it was confirmed that the degree of acetylation R increased in the acetylated wood flours of Examples 1 and 2 more than in the untreated wood flour of Comparative Example 1.

Weight Increase Rate WPG

A weight WO (g) of the wood flour before the decompression treatment and a weight W1 (g) of the acetylated wood flour after drying were precisely weighed, and the weight increase rate WPG (%) was determined by the equation below. The obtained results are shown in Table 1 below.

Weight increase rate WPG (%) = {(W1 - W0)/W0} * 100

[Table 1]

Table 1

|  | Degree of crystallinity CI | Degree of acetylation R | Weight increase rate |
| --- | --- | --- | --- |
|  | [%] | [-] | [%] |
| Example 1 | 42.3 | 0.56 | 24.5 |
| Example 2 | 42.3 | 0.73 | 20.2 |
| Comparative Example 1 | 53.4 | 0.45 | - |

Test 2: Ring-Opening Graft Polymerization of ε-Caprolactone

Examples 3 to 7

An acetylated wood flour grafted with polycaprolactone (ACW-g-PCL) was produced using a personal synthesizer available from Tokyo Rikakikai Co., Ltd. (trade name "ChemiStation Model PPM-5512").

Five reaction tubes were prepared, and 0.1 g of the acetylated wood flour of Example 1 was placed as a reaction raw material in each reaction tube. Subsequently, ε-caprolactone (available from Daicel Corporation) was placed in each reaction tube to give a ratio shown in Table 2 below, the mixture was stirred at a temperature of 120°C for 1 hour, and then a diphenylphosphoric acid/toluene solution was added. The added amount of diphenylphosphoric acid (available from Tokyo Chemical Industry Co., Ltd.) was 2 mass% relative to the total amount of the acetylated wood flour and ε-caprolactone.

The mixture was reacted at 120°C for 24 hours under a nitrogen gas stream, then cooled to 40°C, and diluted with acetone (available from Nacalai Tesque, Inc.) (dilution ratio of 4 to 5 times). Subsequently, the diluted reaction solution was added dropwise to a mixed solvent of 425 mL of acetone (available from Nacalai Tesque, Inc.) and 25 mL of toluene (available from Nacalai Tesque, Inc.), the mixture was stirred overnight, and solid content was separated by decantation and decompression filtration (0.2 μm retention poly(tetrafluoroethylene) (PTFE) membrane filter). An operation of adding the resulting solid content to methanol (available from Nacalai Tesque, Inc.) and then collecting the solid content by filtration was repeated twice to wash the solid content to remove the polycaprolactone homopolymer. The resultant was blow-dried at 40°C for 12 hours and then vacuum-dried at 40°C for 48 hours, and an acetylated wood flour grafted with polycaprolactone was obtained.

The weight of the polycaprolactone graft-acetylated wood flour after drying was precisely weighed, and the reaction yield (%) was calculated as a ratio to the total weight of the acetylated wood flour before grafting and ε-caprolactone. The obtained results are shown in Table 2 below. From Table 2, it was confirmed that the yield of the graft reaction is improved by using the acetylated wood flour as a reaction raw material.

On the assumption that the wood was entirely cellulose and the weight increase rate (24.5%) of Example 1 resulted from the acetylation reaction, the degree of acetyl substitution of the acetylated wood flour of Example 1 is calculated to be 0.945. Based on this degree of acetyl substitution and the reaction yield described above, the number of caprolactone units bound to one residual hydroxy group of the acetylated wood was determined. The obtained results are shown as the average degrees of polymerization in Table 2 below.

Comparative Examples 2 to 6

Comparative Examples 2, 4, and 6 were obtained in the same manner as in Examples 3 to 7 except for changing the reaction raw material from the acetylated wood flour of Example 1 to the wood flour of Comparative Example 1 and changing the ratio of ε-caprolactone to the reaction raw material to the ratio shown in Table 2 below. In Comparative Examples 3 and 5, cellulose acetate (available from Daicel Corporation, degree of acetyl substitution 2.15) was used as the reaction raw material. Each reaction yield is shown in Table 2 below.

Film Forming

The polycaprolactone graft-acetylated wood flours of Examples 3 to 7 and the polycaprolactone graft-wood flour of Comparative Example 2 were hot-press molded using a 10-ton tabletop hot press (available from Toyo Seiki-sha). Specifically, a poly(ethylene terephthalate) (PET) sheet was placed on a metal plate, and about 0.3 g of the polycaprolactone graft-acetylated wood flour or the polycaprolactone graft-wood flour was placed as a sample at the central part of this PET sheet. A PET sheet and a metal plate were further placed on this sample in this order, then the resultant was sandwiched between hot press plates adjusted to 150°C and slowly pressed to a pressure gauge of 5 MPa over 2 minutes to remove air by pressing at a pressure of 5 MPa for 30 seconds. Then, the pressure was increased at once to 15 MPa, and the resultant was pressed as it was for 30 seconds. Immediately after decompression, the sample material was cold-pressed using a second hot press at room temperature under the same pressure (15 MPa) for about 3 minutes, and a film-shaped molded product was obtained. In addition, the resulting film-shaped molded product was placed on a sheet of paper with letters thereon, and the transparency of the film was visually observed.

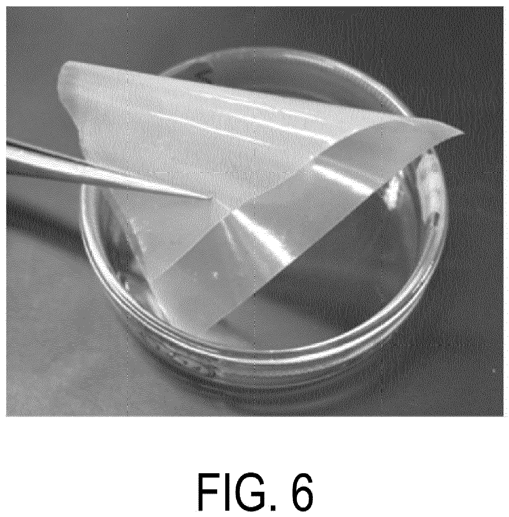

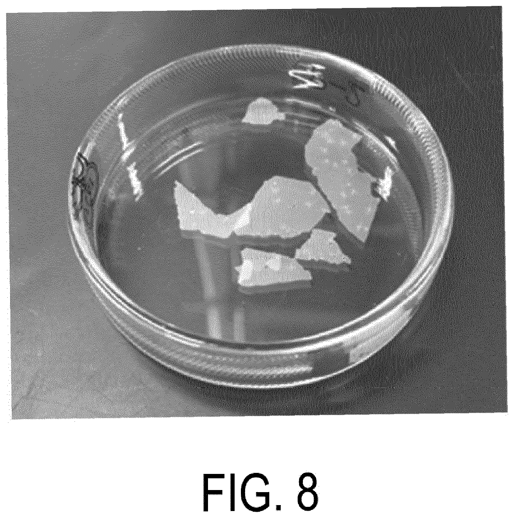

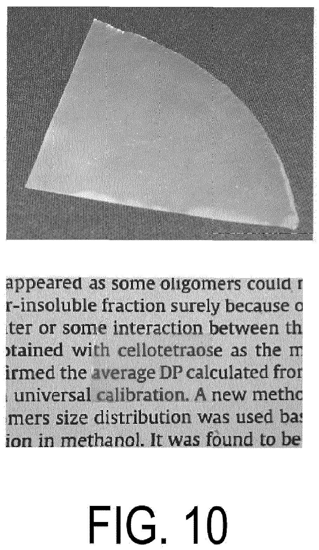

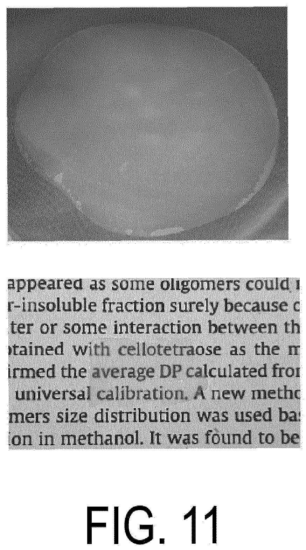

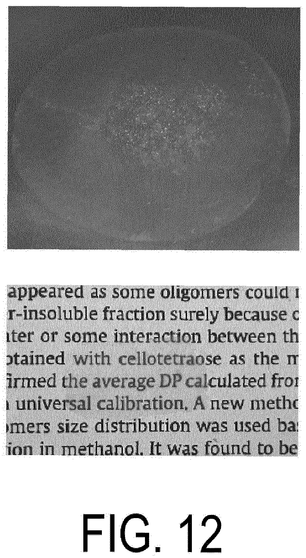

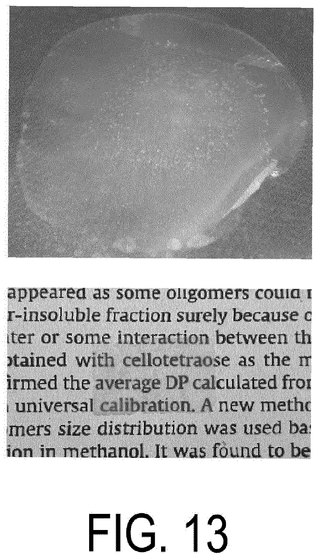

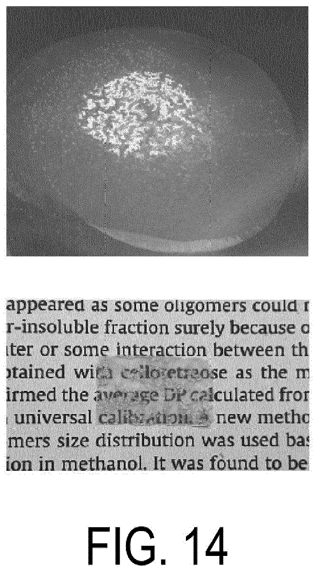

According to Examples 3 to 7, uniform and flexible films were formed by hot-press molding with a hot press. On the other hand, a film obtained by using Comparative Example 2 was very brittle, which failed to provide a test piece for a tensile test described later. Appearance photographs of films obtained using Example 3 and Comparative Example 2 are shown in FIGS. 6 and 8, respectively. FIG. 10 shows another appearance photograph (upper figure) of a film obtained using Example 3 and an appearance photograph (lower figure) when the film was placed on a sheet of paper with letters thereon to observe the transparency of this film. FIGS. 11 to 14 show appearance photographs (upper figures) of films obtained using Examples 4 to 7 respectively and appearance photographs (lower figures) when each film was placed on a sheet of paper with letters thereon to confirm the transparency of each film.

[Table 2]

Table 2

|  | Reaction Raw material | Reaction raw material: CL (weight ratio) | Reaction yield [%] | Average degree of polymerization |
|---|---|---|---|---|
| Example 3 | Acetylated wood flour | 1:40 | 85 | 29.2 |
| Comparative Example 2 | Wood flour | 1:40 | 69 | - |
| Comparative Example 3 | Cellulose acetate | 1:40 | 72 | - |
| Example 4 | Acetylated wood flour | 1:20 | 77 | 13.1 |
| Example 5 | Acetylated wood flour | 1:15 | 80 | 11.6 |
| Comparative Example 4 | Wood flour | 1:15 | 52 | - |
| Comparative Example 5 | Cellulose acetate | 1:15 | 56 | - |
| Example 6 | Acetylated wood flour | 1:8 | 83 | 5.7 |
| Comparative Example 6 | Wood flour | 1:8 | 70 | - |
| Example 7 | Acetylated wood flour | 1:4 | 67 | 2.3 |

Haze Measurement

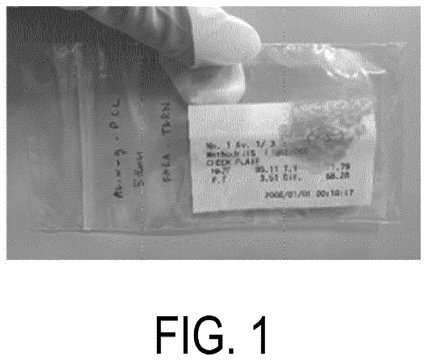

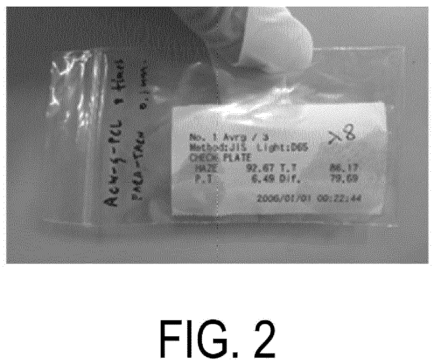

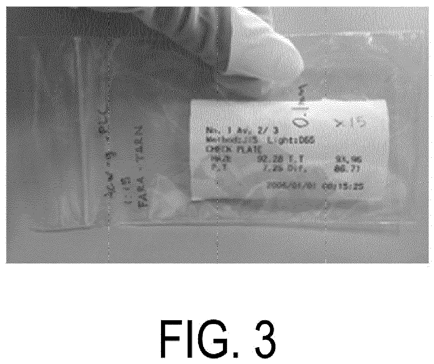

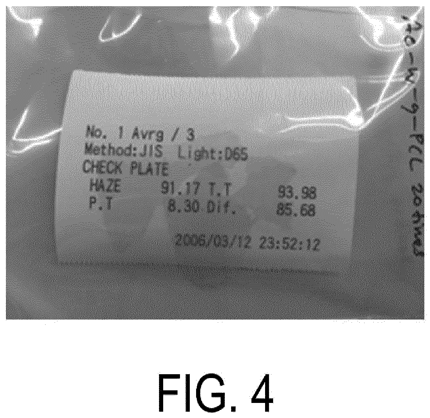

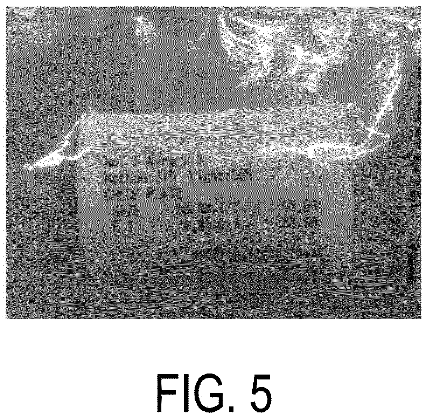

The haze of the film with a thickness of about 0.1 mm obtained by the method described above was measured using a haze meter (trade name "Haze Meter NDH4000" available from Nippon Denshoku Industries Co., Ltd.). The measurement results are shown in Table 3 below. Appearance photographs of the test pieces subjected to the measurement are shown in FIGS. 1 to 5. From Tables 2 and 3 and the appearance photographs, it was confirmed that with higher average degree of polymerization of polycaprolactone, a film with lower haze and higher transparency are obtained.

Tensile Test

A dumbbell-shaped test piece was prepared from the film with a thickness of about 0.1 mm obtained by the method described above using a test piece punching blade No. 7 (available from Kobunshi Keiki Co., Ltd.) in accordance with JIS K 6251. The width and thickness were measured at a part between marked lines of each test piece at three points with a caliper and a micrometer, respectively, and the cross-sectional area was calculated using its average value.

Thereafter, each test piece was subjected to a tensile test using a tensile tester (trade name "Autograph AGS-5kNX" available from Shimadzu Corporation), and a load-deformation curve was measured. For data analysis, "TRAPEZIUM X" available from Shimadzu Corporation was used, and tensile strength (MPa), Young's modulus (MPa), and elongation at break (%) were determined. The measurement conditions were as described below. The results obtained for Examples 3 to 7 and Comparative Example 2 are shown in Table 3 below.

Span length: 15 mm
Cross head speed: 5 mm/min

[Table 3]

Table 3

|  | Haze | Tensile strength | Young's modulus | Elongation at break |
|---|---|---|---|---|
|  | [%] | (MPa) | (MPa) | (%) |
| Example 3 | 89.54 | 31 | 980.00 | 25.01 |
| Example 4 | 91.17 | 18 | 637.20 | 12.47 |
| Example 5 | 92.28 | 15 | 461.41 | 8.72 |
| Example 6 | 92.67 | 6 | 127.89 | 4.43 |
| Example 7 | 95.11 | 1 | 48.23 | 1.69 |
| Comparative Example 2 | - | - | - | - |

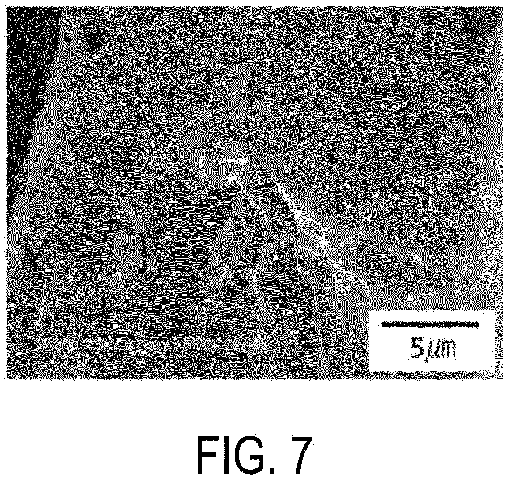

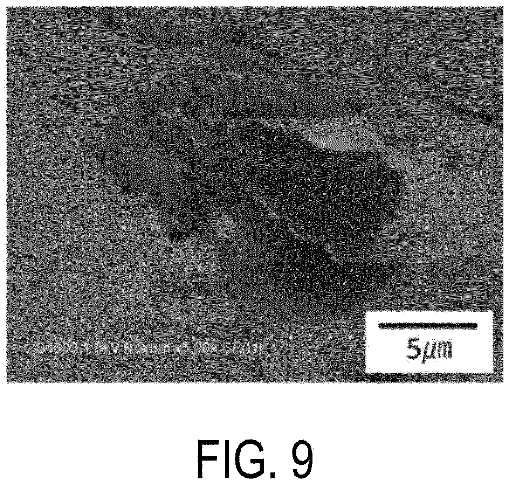

Scanning microscope images (magnification 5000x) of the fracture surfaces of the films of Example 3 and Comparative Example 2 after the tensile test are shown in FIGS. 7 and 9, respectively. From FIG. 9, it was confirmed that in the fracture surface of the film of Comparative Example 2, cracks occurred in the matrix resin, and a trace of an 80 mesh-sized piece of the wood flour presumably pulled out from the matrix remained. It is presumed that in Comparative Example 2, the hydrophobic lactone monomer could not penetrate into the interior of the structure of the wood flour not acetylated and having high polarity, thus the graft reaction occurred only in the vicinity of the surface of the wood flour, and thus sufficient thermoplasticity was not obtained.

On the other hand, as shown in FIG. 7, cracks like those of Comparative Example 2 were not observed in the fracture surface of the film of Example 3. It is considered that in Example 3, the acetylation reduced the degree of crystallinity of cellulose in the wood flour and leaded to hydrophobization of the wood flour, thus the lactone monomer penetrated into the interior of the acetylated wood flour structure and allowed the graft reaction to proceed at a molecular level, and thus the whole acetylated wood flour was converted into a homogeneous plastic-like structure. The fibrous material observed in the central part in FIG. 7 is presumed to be cellulose nanofibers derived from the wood flour structure. This is presumably because the graft reaction proceeded from the surface to the interior of the acetylated wood flour in which the degree of acetylation was low and the wood flour structure remained, and the fibrous material derived from the wood flour structure remained at the central part. This fibrous material may contribute to reinforcement of a molded product, such as a film.

As described above, according to the present disclosure, a thermoformable composition can be obtained using woody biomass as a raw material. Furthermore, a molded product with good properties can be obtained by thermoforming this composition. From the evaluation results, the superiority of the present disclosure is clear.

Disclosed Aspects

Each of the following aspects discloses a preferred embodiment.

Aspect 1

A composition containing an acetylated wood flour, in which the acetylated wood flour is substantially free of an inorganic acid ester bound to a cellulose main chain.

Aspect 2

The composition according to aspect 1, in which the composition is for thermoforming.

Aspect 3

The composition according to aspect 1 or 2, in which a degree of acetylation represented by a ratio $S_1/S_2$ of a peak intensity $S_1$ of stretching vibration derived from acetyl carbonyl at 1730 to 1745 cm$^{-1}$ to a peak intensity $S_2$ of stretching vibration derived from C-O in the cellulose main chain at 1020 to 1040 cm$^{-1}$ in an infrared absorption spectrum of the acetylated wood flour is 0.50 or more.

Aspect 4

The composition according to any of aspects 1 to 3, in which the acetylated wood flour is grafted with a ring-opening polymerization product of a lactone compound.

Aspect 5

The composition according to aspect 4, in which the lactone compound is ε-caprolactone.

Aspect 6

The composition according to aspect 4 or 5, in which an average degree of polymerization of the ring-opening polymerization product of the lactone compound grafted onto the acetylated wood flour is 2.0 or more.

Aspect 7

A molded product formed from the composition described in any of aspects 1 to 6.

Aspect 8

A method of manufacturing the composition described in any of aspects 1 to 6, the method including:

> treating a wood flour under reduced pressure;
> subjecting the wood flour treated under reduced pressure to pressurization treatment at an absolute pressure of 10 bar or more in an immersed state in a solvent containing an acetylating agent; and
> after the pressurization treatment, subjecting the wood flour to acetylation treatment by maintaining the solvent containing the wood flour and the acetylating agent at a temperature of 60 to 130°C in a pressurized state at an absolute pressure of 1.1 to 1.9 bar in an inert gas atmosphere.

Aspect 9

The method of manufacturing the composition according to aspect 8, the method further including performing graft polymerization by adding a lactone compound to the wood flour subjected to the acetylation treatment.

Aspect 10

The method of manufacturing the composition according to aspect 8 or 9, in which the acetylating agent is acetic anhydride, and the solvent is acetic acid.

Aspect 11

The method of manufacturing the composition according to any of aspects 8 to 10, in which an acetylation catalyst is not used in the acetylation treatment.

Aspect 12

The method of manufacturing the composition according to any of aspects 8 to 11, in which the pressurization treatment of the wood flour treated under reduced pressure is performed in a pressurized state at a pressure gauge of 10 bar or more in an inert gas atmosphere.

Aspect 13

The method of manufacturing the composition according to any of aspects 8 to 12, in which the decompression treatment of the wood flour is performed in a reduced pressure state at an absolute pressure of 0.2 bar or less.

Aspect 14

The method of manufacturing the composition according to any of aspects 8 to 13, in which a weight ratio of the acetylating agent to the solvent (acetylating agent/solvent) is from 50/50 to 95/5.

Aspect 15

The method of manufacturing the composition according to any of aspects 8 to 14, in which an increase rate of dry weight of the wood flour subjected to the acetylation treatment is 20.0% or more relative to dry weight of the wood flour before the decompression treatment.

Industrial Applicability

The composition described above can be applied to the production of various molded products using injection molding, melt molding, inflation molding, or the like.

**Claims**

1.  A composition comprising an acetylated wood flour, wherein the acetylated wood flour is substantially free of an inorganic acid ester bound to a cellulose main chain.

2.  The composition according to claim 1, wherein the composition is for thermoforming.

3.  The composition according to claim 1, wherein a degree of acetylation represented by a ratio $S_1/S_2$ of a peak intensity $S_1$ of stretching vibration derived from acetyl carbonyl at 1730 to 1745 cm$^{-1}$ to a peak intensity $S_2$ of stretching vibration derived from C-O in the cellulose main chain at 1020 to 1040 cm$^{-1}$ in an infrared absorption spectrum of the acetylated wood flour is 0.50 or more.

4.  The composition according to claim 1, wherein the acetylated wood flour is grafted with a ring-opening polymerization product of a lactone compound.

5.  The composition according to claim 4, wherein the lactone compound is ε-caprolactone.

6.  The composition according to claim 4, wherein an average degree of polymerization of the ring-opening polymerization product of the lactone compound grafted onto the acetylated wood flour is 2.0 or more.

7.  A molded product formed from the composition described in claim 1.

8.  A method of manufacturing the composition described in claim 1, the method comprising:

    treating a wood flour under reduced pressure;
    subjecting the wood flour treated under reduced pressure to pressurization treatment at an absolute pressure of 10 bar or more in an immersed state in a solvent containing an acetylating agent; and
    after the pressurization treatment, subjecting the wood flour to acetylation treatment by maintaining the solvent containing the wood flour and the acetylating agent at a temperature of 60 to 130°C in a pressurized state at an absolute pressure of 1.1 to 1.9 bar in an inert gas atmosphere.

9.  The method of manufacturing the composition according to claim 8, the method further comprising performing graft polymerization by adding a lactone compound to the wood flour subjected to the acetylation treatment.

10. The method of manufacturing the composition according to claim 8, wherein the acetylating agent is acetic anhydride, and the solvent is acetic acid.

11. The method of manufacturing the composition according to claim 8, wherein an acetylation catalyst is not used in the acetylation treatment.

12. The method of manufacturing the composition according to claim 8, wherein the pressurization treatment of the wood flour treated under reduced pressure is performed in a pressurized state at a pressure gauge of 10 bar or more in an inert gas atmosphere.

13. The method of manufacturing the composition according to claim 8, wherein the decompression treatment of the wood flour is performed in a reduced pressure state at an absolute pressure of 0.2 bar or less.

14. The method of manufacturing the composition according to claim 8, wherein a weight ratio of the acetylating agent to the solvent (acetylating agent/solvent) is from 50/50 to 95/5.

15. The method of manufacturing the composition according to claim 8, wherein an increase rate of dry weight of the wood flour subjected to the acetylation treatment is 20.0% or more relative to dry weight of the wood flour before the decompression treatment.

FIG. 1

FIG. 2

FIG. 3

FIG. 4

FIG. 5

FIG. 6

FIG. 7

FIG. 8

FIG. 9

appeared as some oligomers could r
r-insoluble fraction surely because o
ter or some interaction between th
tained with cellotetraose as the m
irmed the average DP calculated fror
universal calibration. A new methc
mers size distribution was used ba:
ion in methanol. It was found to be

# FIG. 10

FIG. 11

appeared as some oligomers could
r-insoluble fraction surely because o
iter or some interaction between th
otained with cellotetraose as the m
irmed the average DP calculated fro
i universal calibration. A new methc
imers size distribution was used ba
ion in methanol. It was found to be

# FIG. 12

appeared as some oligomers could r
r-insoluble fraction surely because c
ter or some interaction between th
otained with cellotetraose as the m
irmed the average DP calculated from
universal calibration. A new metho
mers size distribution was used ba
ion in methanol. It was found to be

FIG. 13

appeared as some oligomers could r
r-insoluble fraction surely because o
iter or some interaction between th
ıtained wit; ...llo.et...ose as the m
irmed the av...age Dr calculated fror
ı universal cali............ new methc
mers size distribution was used ba:
ion in methanol. It was found to be

# FIG. 14

## INTERNATIONAL SEARCH REPORT

International application No.

**PCT/JP2023/033529**

| A. | CLASSIFICATION OF SUBJECT MATTER |
|---|---|

*C08L 97/02*(2006.01)i; *C08L 51/02*(2006.01)i
FI: C08L97/02; C08L51/02

According to International Patent Classification (IPC) or to both national classification and IPC

| B. | FIELDS SEARCHED |
|---|---|

Minimum documentation searched (classification system followed by classification symbols)

C08L97/02; C08L51/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 62-39656 A (SHIRAISHI, Nobuo) 20 February 1987 (1987-02-20)<br>table 1, example 13, etc. | 1-3, 7 |
| X | JP 57-103804 A (TORAY INDUSTRIES) 28 June 1982 (1982-06-28)<br>example 7, etc. | 1-3, 7 |
| X | JP 2001-342353 A (FUNAOKA, Masamitsu) 14 December 2001 (2001-12-14)<br>paragraphs [0033], [0039], etc. | 1-3, 7 |
| X | JP 2007-84769 A (NITTA KK) 05 April 2007 (2007-04-05)<br>examples 1-4, etc. | 1-3, 7 |
| X | JP 2020-196856 A (NAGOYA INST TECH) 10 December 2020 (2020-12-10)<br>examples 8-13, etc. | 1-3, 7 |
| X | JP 62-225553 A (DAIKEN TRADE & IND CO LTD) 03 October 1987 (1987-10-03)<br>p. 2, upper right column, lines 10-20, examples, etc. | 1-3, 7 |
| A | JP 7-216203 A (SANSEI SOGO KAGAKU KK) 15 August 1995 (1995-08-15) | 1-15 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2023/033529** |

### C.   DOCUMENTS CONSIDERED TO BE RELEVANT

| Category* | Citation of document, with indication, where appropriate, of the relevant passages | Relevant to claim No. |
|:---:|---|:---:|
| A | JP 7-304897 A (DAICEL CHEM IND LTD) 21 November 1995 (1995-11-21) | 1-15 |

Form PCT/ISA/210 (second sheet) (January 2015)

# EP 4 588 977 A1

## INTERNATIONAL SEARCH REPORT
### Information on patent family members

| International application No. |
| --- |
| **PCT/JP2023/033529** |

| Patent document cited in search report | | | Publication date (day/month/year) | Patent family member(s) | Publication date (day/month/year) |
| --- | --- | --- | --- | --- | --- |
| JP | 62-39656 | A | 20 February 1987 | (Family: none) | |
| JP | 57-103804 | A | 28 June 1982 | (Family: none) | |
| JP | 2001-342353 | A | 14 December 2001 | EP 1273632 A1 paragraphs [0061], [0069], etc. | |
| JP | 2007-84769 | A | 05 April 2007 | (Family: none) | |
| JP | 2020-196856 | A | 10 December 2020 | (Family: none) | |
| JP | 62-225553 | A | 03 October 1987 | (Family: none) | |
| JP | 7-216203 | A | 15 August 1995 | US 5614564 A KR 10-1995-0003359 A KR 10-1995-0018201 A | |
| JP | 7-304897 | A | 21 November 1995 | (Family: none) | |

Form PCT/ISA/210 (patent family annex) (January 2015)

33

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60155710 A
- JP 6207045 A
- JP 2011510842 T

- JP 5039412 A
- JP 7304897 A

**Non-patent literature cited in the description**

- **ROWELL M. R. et al.** Acetylation of Wood, in Deterioration and Protection of Sustainable Biomaterials. 2014, 301-327

- **YABUNE H.** *Cellulose Commun.*, 1997, vol. 4 (3), 114-122